# EUROPEAN PATENT SPECIFICATION

(11) **EP 4 122 666 B1**
(45) Date of publication and mention of the grant of the patent: **01.01.2025**
(21) Application number: 21772392.3
(22) Date of filing: 12.03.2021
(51) Int. Cl.: B29B 15/12, B29K 105/12, D02J 1/18, B29C 70/18

(54) **SMC MANUFACTURING METHOD**
SMC-HERSTELLUNGSVERFAHREN
PROCÉDÉ DE FABRICATION DE MÉLANGE À MOULER EN FEUILLE (SMC)

(30) Priority: 18.03.2020 JP 2020047206
(43) Date of publication of application: 25.01.2023
(73) Proprietor: Mitsubishi Chemical Corporation, Chiyoda-ku Tokyo 100-8251 (JP)
(72) Inventor: WATANABE, Yasushi, Tokyo 100-8251 (JP); SAMEJIMA, Tadao, Tokyo 100-8251 (JP); MIZUTORI, Yukihiro, Tokyo 100-8251 (JP); KANEHAGI, Junji, Tokyo 100-8251 (JP)
(74) Representative: Hoffmann Eitle
(86) International application number: PCT/JP2021/009970
(87) International publication number: WO 2021/187346

(56) References cited:
- WO-A1-2016/208731
- WO-A1-2017/111056
- WO-A1-2017/221688
- WO-A1-2020/080238
- WO-A1-2021/149578
- WO-A2-2009/150406
- JP-A- 2000 017 557
- JP-A- 2019 119 148
- JP-A- H 054 246
- JP-A- H04 135 713
- JP-A- S61 157 335

## Description

### [Technical Field]

The present invention relates to a manufacturing method of an SMC (sheet molding compound), and particularly relates to a manufacturing method of a CF-SMC which is an SMC using carbon fiber (CF).

### [Background Art]

In recent years, CFRP (carbon fiber reinforced plastic) which is a composite material comprising a carbon fiber and a resin has been widely used for components of aircraft, automobiles, ships and other various transportation equipment, sports goods, and leisure goods.

A certain type of CFRP products is molded from the CF-SMC by using a compression molding method.

The CF-SMC is a type of carbon fiber prepregs, and has a structure in which a mat comprising chopped carbon fiber bundles (also referred to as a "chopped carbon fiber tow" or a "chopped carbon fiber strand") is impregnated with a thermosetting resin composition.

The CFRP has higher strength when being reinforced with a carbon fiber bundle having a smaller filament number. On the other hand, the carbon fiber bundle requires a higher manufacturing cost when having a smaller filament number (smaller tow size) (Patent Document 1).

It is proposed adding a step of partially splitting a continuous carbon fiber bundle unwound from a creel before chopping to an SMC manufacturing method in which steps are continuously performed from chopping of the continuous carbon fiber bundle to resin impregnation of a carbon fiber mat (Patent Document 2).

The Patent Document D3 is considered to disclose a method for manufacturing SMC. which includes a step of providing a spraying mechanism 8a (based on the drawing, corresponding to a pin roller) directly under a cutter unit 7, and dispersing fiber bundles, which is a part of the invention as in claim 1.

### [Citation List]

### [Patent Documents]

[Patent Document 1]
   United States Patent Application, Publication No. 2012/0213997
[Patent Document 2]
   PCT International Publication No. WO2017/221655
Patent Document 3
   PCT International Publication WO 2017/221688 A1

### [Summary of Invention]

### [Technical Problem]

It is expected that an SMC which can give a high-strength CFRP molded product can be manufactured at low cost by using a technique of partially splitting before use a continuous carbon fiber bundle having a large filament number, typically such as a large tow.

Because various adjustments are required in the step of partially splitting the continuous carbon fiber bundle, overall manufacturing efficiency may be improved when the step and subsequent steps are separated in manufacturing the SMC.

The present invention is made in a process of studies performed by the present inventors, based on the above-described idea, and mainly aims to provide a useful improvement in a CF-SMC manufacturing technique including a CF-SMC manufacturing method in which a continuous carbon fiber bundle is partially split before use.

In some cases, the present specification may explicitly or implicitly disclose problems which can be solved by each embodiment of the present invention.

### [Solution to Problem]

An aspect of the present invention relates to an SMC manufacturing method as defined by the independent claim 1.

### [Advantageous Effects of Invention]

According to the present invention, there is provided a useful improvement in a CF-SMC manufacturing technique including an SMC manufacturing method in which a continuous carbon fiber is partially split before use.

### [Brief Description of Drawings]

Fig. 1 is a schematic diagram of a fiber package manufacturing apparatus.
Fig. 2A is a plan view of a continuous carbon fiber bundle immediately after being partially split into five parts viewed from a thickness direction.
Fig. 2B is a sectional view of the continuous carbon fiber bundle immediately after being partially split into five parts representing a cross section perpendicular to a fiber direction.
Fig. 3 is a schematic diagram representing a cross section perpendicular to the fiber direction of a continuous carbon fiber bundle wound on a bobbin after being partially split into five parts.
Fig. 4 is a schematic diagram of an SMC manufacturing apparatus.
Fig. 5 is a schematic diagram of a rotary cutter.
Fig. 6 is a schematic diagram of a fragmentation processing apparatus.
Fig. 7 is a schematic diagram of a pin roller provided in the fragmentation processing apparatus.
Fig. 8 represents a part of a plane-development of a cylinder circumferential surface of a pin roller.
Fig. 9 is a schematic diagram representing a positional relationship and the like between two pin rollers provided in a fragmentation processing apparatus.
Fig. 10 is a histogram representing a distribution of filament numbers of chopped carbon fiber bundles in a carbon fiber mat.
Fig. 11 is a histogram representing a distribution of filament numbers of chopped carbon fiber bundles in a carbon fiber mat.
Fig. 12 is a histogram representing a distribution of filament numbers of chopped carbon fiber bundles in a carbon fiber mat.
Fig. 13 is a histogram representing a distribution of filament numbers of chopped carbon fiber bundles in a carbon fiber mat.
Fig. 14 is a plan view representing a continuous carbon fiber bundle immediately after being partially split into five parts when viewed from the thickness direction.
Fig. 15 is a histogram representing a distribution of filament numbers of chopped carbon fiber bundles in a carbon fiber mat.

### [Description of Embodiments]

### 1. SMC Manufacturing Method

An SMC is a sheet-shaped carbon fiber prepreg obtainable by impregnating a carbon fiber mat comprising a chopped carbon fiber bundle with a thermosetting resin composition.

One embodiment of the present invention is an SMC manufacturing method including the following steps (i) to (iv).
(i) A step of drawing out a continuous carbon fiber bundle from a package, the continuous fiber bundle having a filament number of NK and partially split into n sub-bundles in advance.
(ii) A step of chopping the continuous carbon fiber bundle drawn out from the package with a rotary cutter to form chopped carbon fiber bundles.
(iii) A step of depositing the chopped carbon fiber bundles on a carrier film traveling below the rotary cutter to form a carbon fiber mat.
(iv) A step of impregnating the carbon fiber mat with a thermosetting resin composition.

In the SMC manufacturing method of the embodiment, fragmentation processing is performed so that at least some of the chopped carbon fiber bundles before being deposited on the carrier film is fragmented by being brought into contact with a rotating body. Through the fragmentation processing, a distribution of the filament numbers of the chopped carbon fiber bundles included in the carbon fiber mat formed in the step (iii) above becomes different from that when the fragmentation processing is not performed.

When necessary, a step of thickening the thermosetting resin composition is further provided after the step (iv).

### 1.1. Continuous Carbon Fiber Bundle

In the SMC manufacturing method of the embodiment, a package of the continuous carbon fiber bundle prepared in advance is used. The continuous carbon fiber bundle has a filament number of NK and is partially split into n sub-bundles.

NK means N×1000. For example, a filament number of a carbon fiber bundle comprising 3,000 single filaments is 3K, and a filament number of a carbon fiber bundle comprising 12,000 single filaments is 12K.

N is usually 12 or more, preferably 15 or more, and can be, but not limited to 18, 24, 36, 48, or 50, for example.

When it is said that a continuous carbon fiber bundle is partially split into n sub-bundles, it means, in other words, that the continuous carbon fiber bundle is partially divided into n parts. Each of the n fiber bundles formed by dividing into n parts is called a sub-bundle.

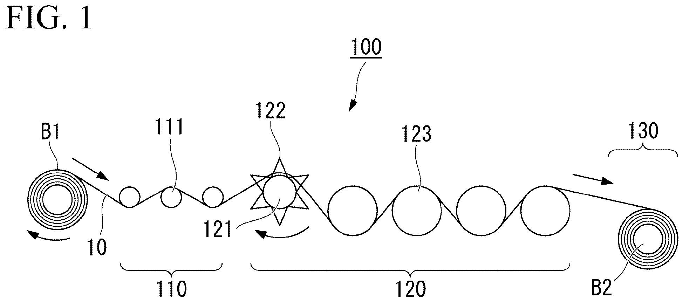

The package of the partially split continuous carbon fiber bundle can be manufactured using, but not limited to a fiber package manufacturing apparatus represented in a conceptual diagram in Fig. 1.

Referring to Fig. 1, a fiber package manufacturing apparatus 100 includes a spread section 110, a split section 120, and a winding section 130.

A continuous carbon fiber bundle 10 serving as a starting material and having a filament number of NK is drawn out from a supply bobbin B1.

The continuous carbon fiber bundle 10 drawn out from the supply bobbin B 1 before being split is first spread in the spread section 110.

A spreader bar 111 provided in the spread section 110 may be heated and may be caused to reciprocate in a width direction of the continuous carbon fiber bundle 10. Mechanisms therefor can refer to a known technique.

While the continuous carbon fiber bundle 10 originally has a flat shape, it is further increased in width and further decreased in thickness by being rubbed against the spreader bar 111. The thickness of the continuous carbon fiber bundle 10 after passing through the spread section 110 is not limited, but can typically be 0.05 to 0.2 mm.

The spread section 110 may be omitted, when the continuous carbon fiber bundle 10 is sufficiently flat at a stage when the continuous carbon fiber bundle 10 is supplied from the supply bobbin B1. For example, a carbon fiber bundle having a bundle width of 50 times or more of an average thickness can be said to be sufficiently flat.

Next, the continuous carbon fiber bundle 10 is fed to the split section 120 and is partially split there.

The split section 120 is provided with a rotary blade 121 for forming a slit in the continuous carbon fiber bundle 10 and a plurality of godet rolls 123 for controlling a traveling speed of the continuous carbon fiber bundle 10.

A rotation axis of the rotary blade 121 is parallel to a width direction of the continuous carbon fiber bundle 10 traveling along a fiber direction. A plurality of blade parts 122 are provided at a regular interval in a circumferential direction on an outer circumference of the rotary blade 121, so that slits having a constant length are intermittently formed at a regular interval along the fiber direction of the continuous carbon fiber bundle 10. A slit length and a gap length between the slits can be controlled by adjusting the traveling speed of the continuous carbon fiber bundle 10, a circumferential speed of the rotary blade 121, and/or an interval between the blade portions 122.

The continuous carbon fiber bundle 10 is partially divided into n parts due to intermittent formation of slits along the fiber direction by (n-1)-number of the rotary blades 121 aligned in a direction parallel to the width direction of the traveling continuous carbon fiber bundle 10.

The number n is not limited to, but preferably 3 or more and more preferably 5 or more and may be 10 or more.

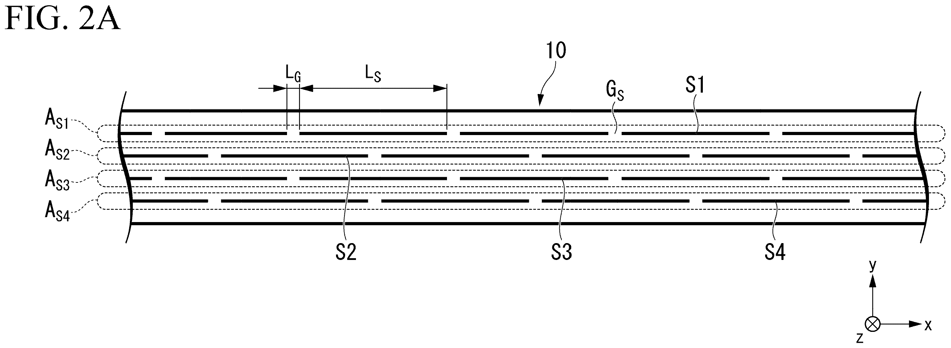

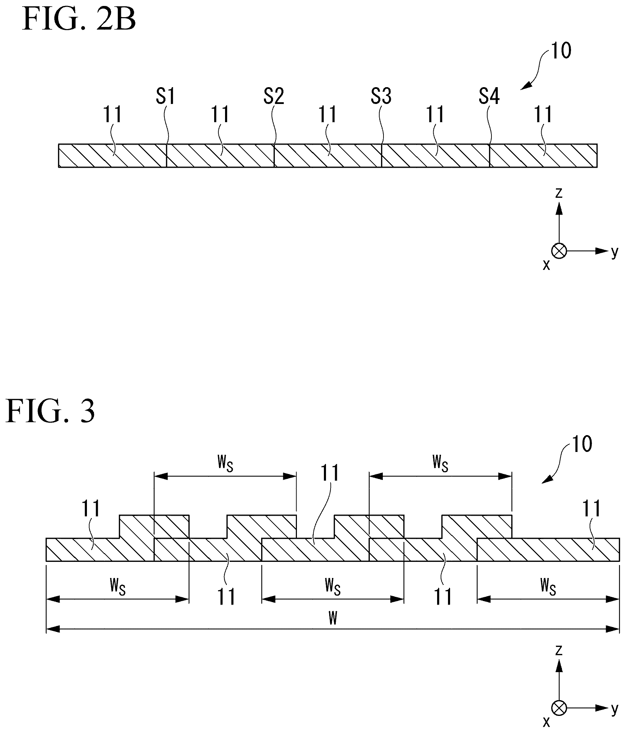

As an example, Figs. 2A and 2B represent the continuous carbon fiber bundle 10 immediately after the slits extending in the fiber direction are intermittently formed by four rotary blades 121.

For convenience, when in the continuous carbon fiber bundle 10, the fiber direction (longitudinal direction) is defined as an x-direction, the width direction is defined as a y-direction and the thickness direction is defined as a z-direction, Fig. 2A is a plan view when the continuous carbon fiber bundle 10 is viewed from the z-direction and Fig. 2B represents a cross section of the continuous carbon fiber bundle 10 perpendicular to the x-direction (cross section when cut by an yz-plane).

As represented in Fig. 2A, in the continuous carbon fiber bundle 10, four slit rows including a first slit row A_{S1}, a second slit row A_{S2}, a third slit row A_{S3}, and a fourth slit row A_{S4} are formed.

The first slit row A_{S1} comprises a plurality of first slits S1 aligned in the x-direction.

The second slit row A_{S2} comprises a plurality of second slits S2 aligned in the x-direction.

The third slit row A_{S3} comprises a plurality of third slits S3 aligned in the x-direction.

The fourth slit row A_{S4} comprises a plurality of fourth slits S4 aligned in the x-direction.

The four slit rows are formed by different rotary blades and therefore are different from each other in positions in the y-direction.

A slit length Ls and an inter-slit gap length L_{G} are constant in any of the slit rows, and are common also among different slit rows.

A ratio L_{S}/(L_{S}+L_{G}) of the slit length L_{S} to a sum of the slit length L_{S} and the inter-slit gap length L_{G} is usually 90*%* or higher and preferably 95% or higher and may be 99% for example. Therefore, as represented in Fig. 2B, the continuous carbon fiber bundle 10 is split into five sub-bundles 11 in most parts.

The positions of the first slit row A_{S1}, the second slit row A_{S2}, the third slit row A_{S3}, and the fourth slit row A_{S4} in the y-direction are set so that the widths of the five sub-bundles 11 are approximately the same. For example, when the filament number of the continuous carbon fiber bundle 10 is 15K, the filament number of each of the sub-bundles 11 is 3K±0.5K.

The slit length Ls is not limited to, but preferably more than 25 mm, more preferably more than 50 mm, and much more preferably more than 500 mm. The slit length Ls can be 10 times or more, further 20 times or more, and further 30 times or more the cutting length when the continuous carbon fiber bundle 10 is cut to manufacture an SMC.

For example, the slit length Ls can be more than 25 mm and 50 mm or less, more than 50 mm and 100 mm or less, more than 100 mm and 200 mm or less, more than 200 mm and 500 mm or less, more than 500 mm and 1000 mm or less, more than 1000 mm and 1500 mm or less, more than 1500 mm and 2000 mm or less, and more than 2000 mm and 3000 mm or less.

The inter-slit gap length L_{G} is not limited to, but for example 5 to 10 mm and may be less than 5 mm.

In an example represented in Fig. 2A, positions of inter-slit gaps Gs are shifted in the x-direction between the first slit row A_{S1} and the second slit row A_{S2}. The same applies to between the second slit row A_{S2} and the third slit row A_{S3}, and between the third slit row A_{S3} and the fourth slit row A_{S4}.

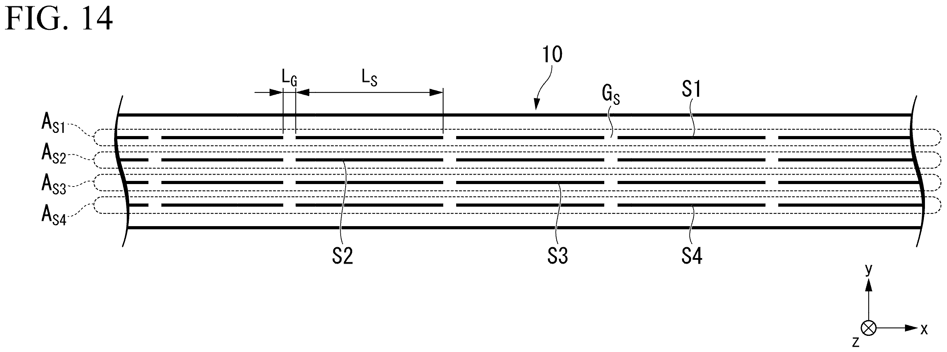

Such a configuration with a shifting in the positions of the inter-slit gaps Gs in the x- direction between the adjacent slit rows is not essential. In one example, the positions of the inter-slit gaps Gs may be aligned among all of the slit rows as represented in Fig. 14. In another example, the positions of the inter-slit gaps Gs may be aligned among some of the slit rows and shifted in the x-direction among some other slit rows.

The slit length Ls, the inter-slit gap length L_{G}, a ratio L_{S}/(L_{S}+L_{G}) of the slit length Ls to a sum of the slit length Ls and the inter-slit gap length L_{G}, and the position of the inter-slit gap G_{S} as described above are not limited to a case where the continuous carbon fiber bundle 10 is partially split into the five sub-bundles, and the same applies to a case where the continuous carbon fiber bundle 10 is partially split into four sub-bundles or less or six sub-bundles or more.

Regardless of the number n, the filament number of the sub-bundle formed by splitting the continuous carbon fiber bundle 10 is preferably 5K or less, more preferably 4K or less, and much more preferably 3K or less.

Regardless of the number n, the filament number of the sub-bundle formed by splitting the continuous carbon fiber bundle 10 is preferably more than 0.5K and more preferably 1K or more. When the filament number is more than 0.5K, straightness of the carbon fiber bundle is likely to be maintained, and a reinforcing effect tends to be relatively high.

The abovementioned upper limits and lower limits can be arbitrarily combined. For example, regardless of the number n, the filament number of the sub-bundle formed by splitting the continuous carbon fiber bundle 10 is preferably 0.5K to 5K, more preferably 0.5K to 4K and much more preferably 1K to 3K.

Referring to Fig. 1 again, the continuous carbon fiber bundle 10 partially split into n parts in the split section 120 is fed to the winding section 130, and is wound on a winding bobbin B2, thereby completing the package.

For example, the winding bobbin B2 is a paper tube, but is not limited thereto. When the package is used, the winding bobbin B2 can be pulled out, and the continuous carbon fiber bundle can be unwound by internal unwinding.

The continuous carbon fiber bundle 10 is wound such that there is no gap between the sub-bundles 11. The reason is to prevent the sub-bundles 11 from biting each other between a part previously wound on the bobbin B2 and a part wound later so as to overlap the previously wound part. By winding such that there is no gap between the sub-bundles 11, the continuous carbon fiber bundle 10 can be prevented from being entangled or broken during unwinding by external unwinding or internal unwinding.

In order to wind the continuous carbon fiber bundle 10 on the bobbin so that there is no gap between the sub-bundles 11, a total width W of the continuous carbon fiber bundle 10 may be made narrower than a sum of sub-bundle widths Wₛ as represented in Fig. 3.

Fig. 3 is a sectional view when the continuous carbon fiber bundle 10 is cut perpendicular to the fiber direction, showing that the five sub-bundles 11 are arranged side by side without any gap in the y-direction. That is, there is no part where the adjacent sub-bundles 11 are away from each other, and each of the sub-bundles 11 overlaps the immediately adjacent sub-bundle 11 at an edge portion.

The width of the carbon fiber bundle can be reduced by guiding the carbon fiber bundle with a guide having a width narrower than that of the carbon fiber bundle. Therefore, in order to wind the continuous carbon fiber bundle 10 on the bobbin B2 in a state where the total width W is narrowed than a total sum of the sub-bundle widths Wₛ, for example, a grooved roll having a groove width narrower than the total sum of the sub-bundle widths may be used in guiding the continuous carbon fiber bundle after being partially split to the winding bobbin. Alternatively, the width of a fiber bundle guide of a traverse device may be narrowed than the total sum of the sub-bundle widths.

When the total width of the continuous carbon fiber bundle is narrowed by the above-described method, not only the sub-bundles may overlap each other, but also some sub-bundles may be folded in the width direction. Therefore, a manner of overlapping of the sub-bundles in the continuous carbon fiber bundle wound on the winding bobbin is not limited to the manner represented in Fig. 3 and can be various.

In order to ensure that there is no gap between the sub-bundles, the total width of the continuous carbon fiber bundles 10 when wound on the winding bobbin is preferably 90% or less, more preferably 80*%* or less of the total sum of the widths of the sub-bundles.

The total width of the continuous carbon fiber bundle when wound on the winding bobbin is preferably, but without limitation, not narrowed until the total width is equal to the width of the sub-bundle. In particular, in a case where the number n of sub-bundles is large, when the total width is excessively small, winding collapse is likely to occur.

A traverse device (not represented) is usually installed in the winding section 130.

When the continuous carbon fiber bundle 10 is traverse-wound on the winding bobbin B2, although not limiting, a lead angle at a start of winding can be set to, for example, 5° to 30° and the lead angle at an end of winding can be set to, for example, 2° to 17°.

A winding ratio represents rotation times of the bobbin during one round trip of a traverse guide, and in other words, the winding ratio may be paraphrased as the number of turns per one traverse cycle. When a yarn is wound on a bobbin with a constant winding ratio, when the winding ratio is an integer, the yarn is wound at the same position of the bobbin in all traverse cycles, thereby causing so-called ribbon winding and a possible poor unwinding property.

When a fraction of the winding ratio after a decimal point is a multiple of 1/p (p is an integer of 2 or more), the yarn is wound at the same position of the bobbin every p-traverse cycle, thereby causing a possible poor unwinding property particularly when p is small, as in a case where the winding ratio is an integer.

Therefore, when the continuous carbon fiber bundle 10 is wound on the winding bobbin B2, the winding ratio is usually not an integer, and further it is preferable that the fraction of the winding ratio after the decimal point is a multiple of none of 1/2, 1/3, 1/4 and 1/5.

### 1.2. SMC Manufacturing Apparatus

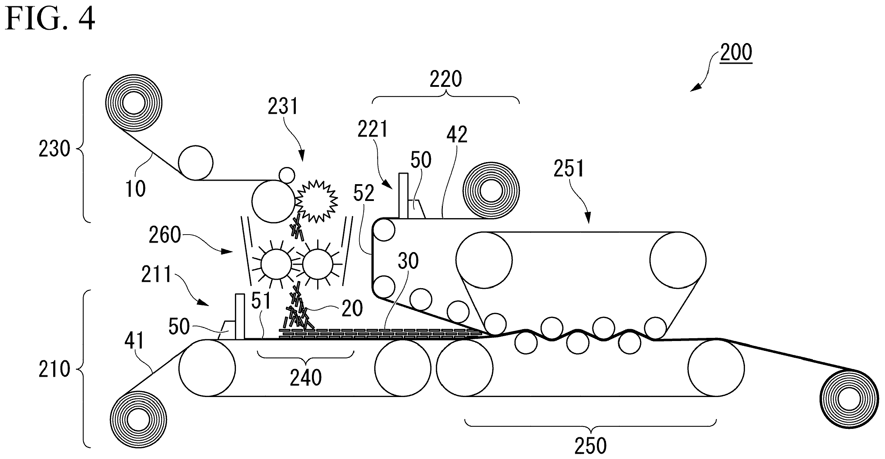

Fig. 4 represents a conceptual diagram of an SMC manufacturing apparatus that can be preferably used in an SMC manufacturing method of the embodiment.

Referring to Fig. 4, an SMC manufacturing apparatus 200 includes a first resin application section 210, a second resin application section 220, a chopping section 230, a deposition section 240, and an impregnation section 250. A fragmentation processing apparatus 260 is disposed between the chopping section 230 and the deposition section 240.

The first resin application section 210 is provided with a first applicator 211 including a doctor blade to form a first resin layer 51 comprising a thermosetting resin composition 50 on a first carrier film 41 drawn out from a roll.

The second resin application section 220 is provided with a second applicator 221 including a doctor blade to form a second resin layer 52 comprising the same thermosetting resin composition 50 on a second carrier film 42 drawn out from a roll.

The chopping section 230 is provided with a rotary cutter 231 for chopping a continuous carbon fiber bundle 10 drawn out from a package (the bobbin may be removed).

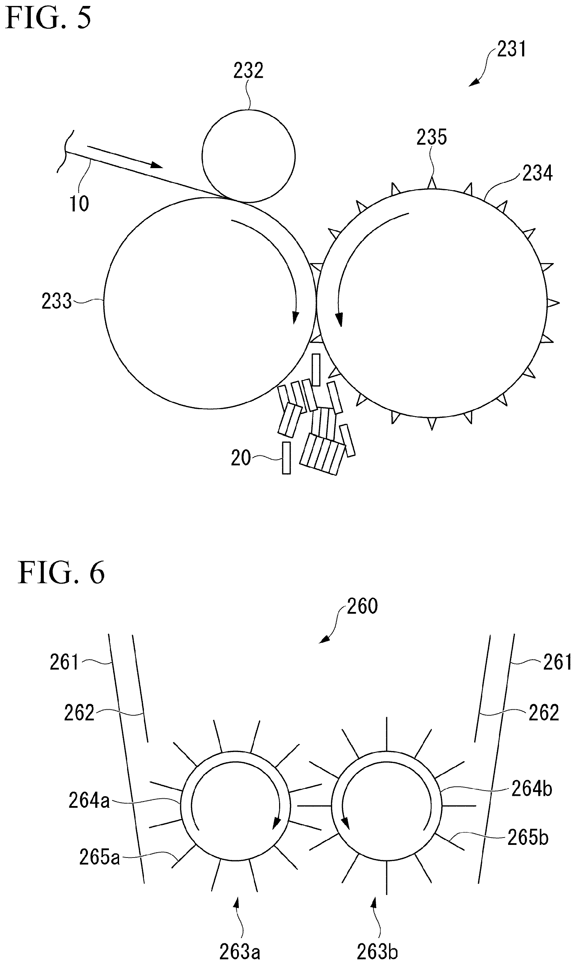

As represented in Fig. 5, the rotary cutter 231 includes a guide roll 232, a pinch roll 233, and a cutter roll 234. A plurality of blades 235 are disposed on an outer circumference of the cutter roll 234 at a regular interval in a circumferential direction, and chopped carbon fiber bundles 20 having a constant fiber length can be cut out one after another from the continuous carbon fiber bundle 10.

Usually, a plurality of the continuous carbon fiber bundles 10 are aligned to be parallel to each other in a plane parallel to a rotation axis direction of the rotary cutter 231 and are supplied to the rotary cutter 231 at the same time.

The rotation axis direction of the rotary cutter 231 is a rotation axis direction of the rolls provided in the rotary cutter 231, that is, a rotation axis direction of the cutter roll 234. The directions of the rotation axes of the guide roll 232 and the pinch roll 233 are also the same as the direction of the rotation axis of the cutter roll 234.

The deposition section 240 is disposed below the chopping section 230. The first carrier film 41 is conveyed from the first resin application section 210 to the impregnation section 250 via the deposition section 240. When the first carrier film 41 travels in the deposition section 240, the chopped carbon fiber bundles 20 produced in the chopping section 230 are fallen and deposited on the first resin layer 51 formed on a surface of the first carrier film 41, so that a carbon fiber mat 30 is formed.

A mechanism for gradually bringing the first carrier film 41 and the second carrier film 42 closer to each other is disposed in an upstream part of the impregnation section 250. An impregnation machine 251 is disposed in a main part of the impregnation section 250. In order that a laminate in which the carbon fiber mat 30 and the thermosetting resin composition 50 are sandwiched between the first carrier film 41 and the second carrier film 42 is conveyed by being sandwiched from above and below with two conveyor belts, the impregnation machine 251 includes two belt conveyors located above and below, and includes rollers for pressurizing the laminate by sandwiching it together with the conveyor belts.

As represented in Fig. 6, the fragmentation processing apparatus 260 disposed between the chopping section 230 and the deposition section 240 includes a cover 261, and guide plates 262 and a pair of pin rollers (first pin roller 263a and second pin roller 263b) which are disposed inside the cover. The first pin roller 263a and the second pin roller 263b have substantially the same axial length, and have the rotation axes parallel to each other.

In the SMC manufacturing apparatus 200, the fragmentation processing apparatus 260 is disposed such that the rotation axes of the first pin roller 263a and the second pin roller 263b are parallel to the rotation axis direction of the rotary cutter 231. The position of the fragmentation processing apparatus 260 is preferably right below the rotary cutter 231.

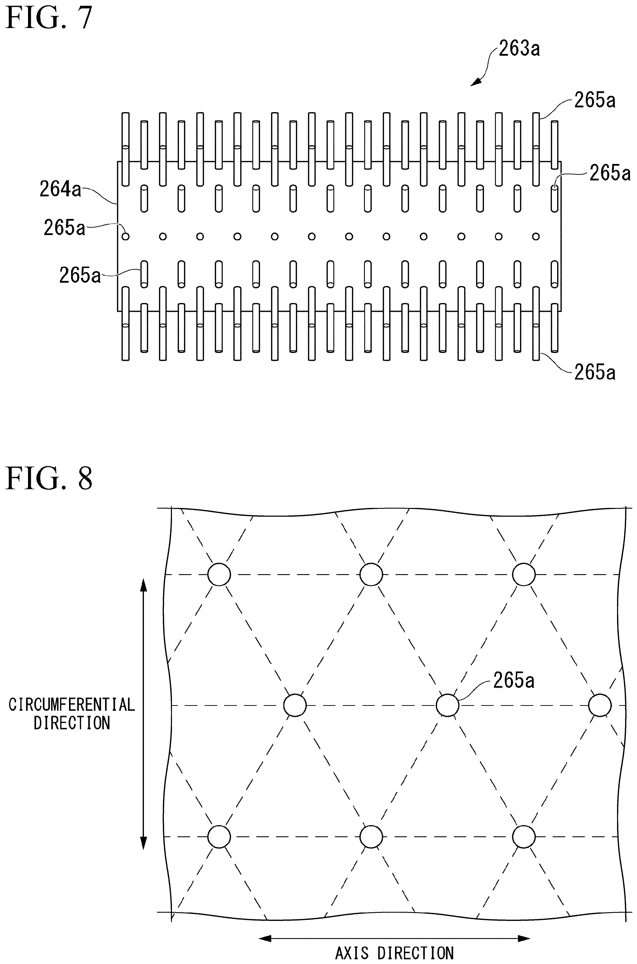

Referring to Fig. 7, the first pin roller 263a has a cylinder 264a, and a plurality of pins 265a having the same shapes and the same dimensions are disposed on the surface thereof. Both the cylinder 264a and the pins 265a are rigid bodies, and are formed of metal, for example.

A diameter of the cylinder 264a is not limited, but can be 60 mm to 150 mm, for example.

The pins 265a extend to be perpendicular to the rotation axis of the first pin roller 263a. Although not limited, the pin 265a has a columnar shape, for example. A boundary between an end surface and a circumferential surface may be chamfered in the pin 265a.

The diameter of the pin 265a is not limited, but can be, for example, 1 mm to 5 mm.

The length of the pin 265a, that is, the distance from the tip to the root of the pin is not limited, but can be 10 mm to 50 mm, for example.

It is preferable that the pin 265a has a circular cross section to prevent fuzzing of the chopped carbon fiber bundle 20 processed by the fragmentation processing apparatus 260. The pin 265a may have a shape of a cone or a truncated cone whose diameter decreases toward the tip.

It is preferable that disposition of the pin 265a on the circumferential surface of the cylinder 264a overlaps original disposition when shifted by 5 mm to 20 mm in the axial direction and 4 mm to 30 mm in the circumferential direction.

For example, in a case of the cylinder 264a represented in Fig. 7, when the circumferential surface is plane-developed, the pin 265a is disposed at each vertex of equilateral triangles (indicated by a broken line) tessellating such that one side is parallel to the axial direction, as represented in Fig. 8. For example, when the length of one side of the equilateral triangle is 5 mm, the disposition of the pin 265a represented in Fig. 8 overlaps the original disposition when shifted by 2.5 mm in the axial direction and approximately 4.3 mm in the circumferential direction.

In this specification, the maximum radius of the pin roller is defined as a distance from the rotation axis to the tip of the pin. In the first pin roller 263a, the radius of the cylinder 264a is preferably half or more of the maximum radius of the first pin roller 263a, and is more preferably 75% or more. The reason is that as the ratio of the cylinder radius to the maximum radius of the pin roller increases, a difference decreases between the circumferential speed at the tip of the pin and the circumferential speed at the root of the pin when the pin roller is rotated.

All with regard to the first pin roller 263a described above are also applied to the second pin roller 263b.

Although not limited, in order to reduce costs for designing, manufacturing, and maintaining the fragmentation processing apparatus 260, it is preferable that in items as many as possible, including the maximum radius, the cylinder diameter and the shape, the dimension, the number and the disposition of the pins, designs and specifications of the first pin roller 263a and the second pin roller 263b coincide with each other.

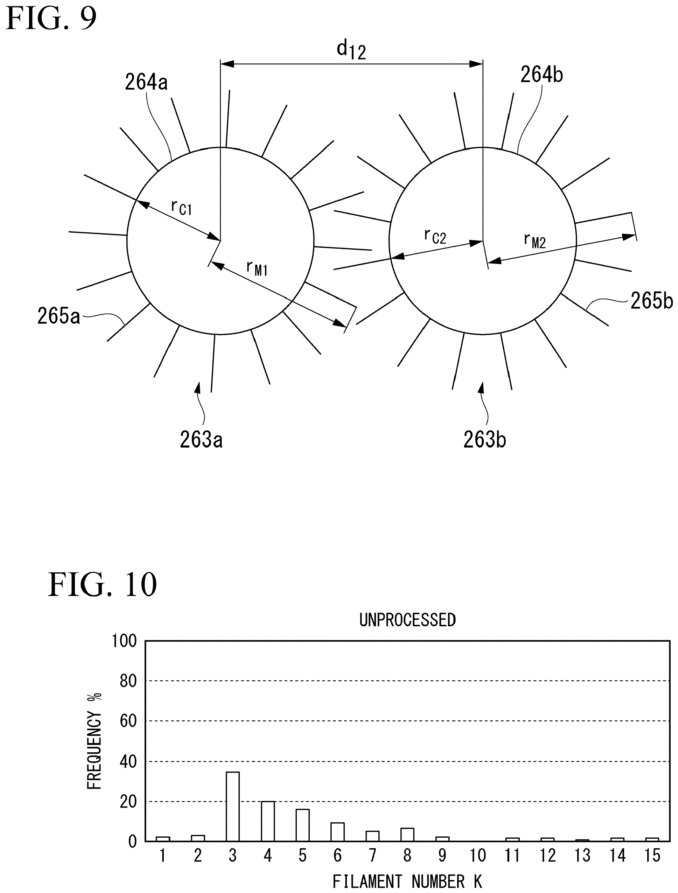

Referring to Fig. 9, in the fragmentation processing apparatus 260, the sum of the maximum radius r_{M1} of the first pin roller 263a and the maximum radius r_{M2} of the second pin roller 263b is larger than a distance d₁₂ between the rotation axes of the two pin rollers.

The sum of the maximum radius r_{M1} of the first pin roller 263a and the radius r_{C2} of the cylinder 264b of the second pin roller is smaller than the distance d₁₂ between the rotation axes of the two pin rollers. Similarly, the sum of the maximum radius r_{M2} of the second pin roller 263b and the radius r_{C1} of the cylinder 264a of the first pin roller is also smaller than the distance d₁₂ between the rotation axes of the two pin rollers.

A difference {(r_{M1} + r_{M2})) - d₁₂} between the sum of the maximum radius r_{M1} of the first pin roller 263a and the maximum radius r_{M2} of the second pin roller 263b and the distance d₁₂ between the rotation axes is not limited but may be 20 mm or less, 15 mm or less, 10 mm or less, or 5 mm or less.

The first pin roller 263a and the second pin roller 263b are rotationally driven by a drive mechanism (not represented). Rotation speeds of the first pin roller 263a and the second pin roller 263b may be independently controllable.

Rotation directions of the first pin roller 263a and the second pin roller 263b are as indicated by arrows in Fig. 6. That is, the first pin roller 263a rotates such that its pins move downward from above on its side facing the second pin roller 263b, and the second pin roller 263b rotates such that its pins move downward from above on its side facing the first pin roller 263a.

Rotating both the first pin roller 263a and the second pin roller 263b in such a way is advantageous in preventing the chopped carbon fiber bundle 20 from being clogged between the two pin rollers.

Substantially all of the chopped carbon fiber bundles 20 produced in the chop section 230 are fallen to the deposition section through between the cylinder 264a of the first pin roller 263a and the cylinder 264b of the second pin roller 263b. Since difference in falling positions of the chopped carbon fiber bundles 20 depending on bundle sizes is less likely to occur, even when a distribution of the bundle sizes of the chopped carbon fiber bundles 20 is wide, there is an advantage in that the carbon fiber mat 30 is likely to be uniform in the thickness direction.

In a modified embodiment, in the fragmentation processing apparatus 260, a sum of the maximum radius r_{M1} of the first pin roller 263a and the maximum radius r_{M2} of the second pin roller 263b may be equal to the distance d₁₂ between the rotation axes of the two pin rollers.

In another modified embodiment, in the fragmentation processing apparatus 260, a sum of the maximum radius r_{M1} of the first pin roller 263a and the maximum radius r_{M2} of the second pin roller 263b may be slightly smaller than the distance d₁₂ between the rotation axes of the two pin rollers, and in that case, a difference {d₁₂ - (r_{M1} + r_{M2})} therebetween is preferably 10 mm or less, and is more preferably 5 mm or less.

### 1.3. SMC Manufacturing Method

An SMC manufacturing method of the embodiment will be described using, as an example, a case in which the SMC manufacturing apparatus 200 described in 1.2 above is used.

### (Drawing out Step)

In a drawing out step, a continuous carbon fiber bundle is drawn out from a package of the continuous carbon fiber bundle prepared in advance. The continuous carbon fiber bundle has a filament number of NK and is partially split into n sub-bundles in advance.

In this step, the continuous carbon fiber bundle may be drawn out by external unwinding from a bobbin package placed on a creel, or the continuous carbon fiber bundle may be drawn out by internal unwinding from a package from which a bobbin is removed.

As described above, when the package is manufactured, the continuous carbon fiber bundle is wound on the bobbin in a state where the adjacent sub-bundles overlap each other. Therefore, the continuous carbon fiber bundle drawn out from the package includes a part in which the sub-bundles are partially overlapped and sticked to each other.

### (Chopping Step)

In a chopping step, the drawn out continuous carbon fiber bundle 10 is supplied to the chopping section 230 and cut one after another by the rotary cutter 231, thereby producing the chopped carbon fiber bundles 20 having a predetermined fiber length. The produced chopped carbon fiber bundles 20 fall toward the fragmentation processing apparatus 260 placed below the rotary cutter 231.

The fiber length of the chopped carbon fiber bundle 20 is not limited, but can be 5 to 100 mm, preferably 20 to 60 mm, for example, and can be typically approximately 13 mm, approximately 25 mm, or approximately 50 mm.

### (Fragmentation Processing Step)

As described above, the continuous carbon fiber bundle drawn out from the package includes a part in which the sub-bundles are partially overlapped and sticked to each other. The chopped carbon fiber bundles produced in the chopping step include to some extent a fiber bundle having a filament number of more than { (N/n)+0.5 } K, which is generated by cutting such part of the continuous carbon fiber bundle. The fragmentation processing step aims to improve a distribution of the filament numbers of the chopped carbon fiber bundles in the carbon fiber mat formed in a deposition step (to be described later) by fragmentation of such fiber bundle with the fragmentation processing apparatus.

In the fragmentation processing apparatus 260, at least some of the chopped carbon fiber bundles 20 falling from the rotary cutter 231 come into contact with at least one of the first pin roller 263a and the second pin roller 263b and are divided into a plurality of fragments by an impact.

The fragmentation processing is not intended for defibration. That is, the fragmentation processing is not to loosen the chopped carbon fiber bundle into single fiber filaments or a state close to single fiber filaments. In a preferred example, a circumferential speed at a tip of the pin of each of the first pin roller 263a and the second pin roller 263b is set so that the fragmentation processing does not generate a fiber bundle having a filament number of 0.5K or less and a single fiber filament, or even when generated, so that a content thereof in the carbon fiber deposited on the first carrier film 41 is lower than 1% by weight.

One of reasons why the rotation directions of the first pin roller 263a and the second pin roller 263b are each set such that the pins move downward from above on the side facing the other pin roller is to prevent applying a strong shearing force to the chopped carbon fiber bundles 20 passing through between the two pin rollers. It is conceivable that the strong shearing force causes fuzzing or straightness deterioration of the carbon fiber bundles.

In order to more effectively achieve this object, it is preferable that rotation speeds (rpm) of the first pin roller 263a and the second pin roller 263b are set such that the circumferential speed at the tip of the former's pin 265a and the circumferential speed at the tip of the latter's pin 265b are equal to each other.

### (Resin Application Step)

In a resin application step, the first resin layer 51 comprising the thermosetting resin composition 50 is formed on the first carrier film 41 drawn out from a roll using the first applicator 221, and the second resin layer 52 comprising the same thermosetting resin composition 50 is formed on the second carrier film 42 drawn out from another roll using the second applicator 212.

The thermosetting resin composition 50 is a fluid paste containing a thermosetting resin as a main component and in which a thickener and a curing agent are blended, and if necessary, additives such as a reactive diluent, a low shrinkage agent, a filler, and a flame retardant are blended.

Typical examples of the thermosetting resin are an epoxy resin, a vinyl ester resin, an unsaturated polyester resin, a polyimide resin, a maleimide resin and a phenol resin, and two or more types selected from these resins can be mixed and used.

Preferred thermosetting resins are the epoxy resin, the vinyl ester resin, and the unsaturated polyester resin in view of excellent adhesiveness to the carbon fiber.

With regard to a specific formulation of the thermosetting resin composition, a related art can be appropriately referred to.

### (Deposition Step)

In a deposition step, the chopped carbon fiber bundles 20 processed by the fragmentation processing apparatus 260 fall on the first carrier film 41 conveyed below the fragmentation processing apparatus 260. The fallen chopped carbon fiber bundles 20 are deposited on the first resin layer 51 formed on a surface of the first carrier film 41, thereby forming the carbon fiber mat 30.

### (Impregnation Step)

On the way to the impregnation machine 251, the first carrier film 41 loaded with the carbon fiber mat 30 deposited on the first resin layer 51 is laminated with the second carrier film 42 with a side having the second resin layer 52 formed thereon facing downward.

The carbon fiber mat 30 is impregnated with the thermosetting resin composition 50 by pressurizing the laminate formed by the lamination with the impregnation machine 251.

After the impregnation step is completed, the impregnated carbon fiber mat 30 is wound on a bobbin while sandwiched between the first carrier film 41 and the second carrier film 42 and becomes an SMC product through an aging step to be performed when necessary. In the aging step, the thermosetting resin composition 50 becomes highly viscous by an action of the added thickener and is brought into a semi-cured state.

### 1.4. SMC Manufacturing Method according to Modified Embodiment

According to the SMC manufacturing method described in 1.3, the continuous carbon fiber bundle having a filament number of NK and partially split into n sub-bundles is used as a raw material. In the SMC manufacturing method according to a modified embodiment, a continuous carbon fiber bundle which has not been processed to partially split may be used as the raw material.

Therefore, the SMC manufacturing method below is also included in the embodiment of the present invention.

An SMC manufacturing method comprising:
forming chopped carbon fiber bundles by chopping a continuous carbon fiber bundle with a rotary cutter;
forming a carbon fiber mat by depositing the chopped carbon fiber bundles on a carrier film traveling below the rotary cutter; and
impregnating the carbon fiber mat with a thermosetting resin composition,
wherein fragmentation processing using a fragmentation processing apparatus (A) below is performed on the chopped carbon fiber bundles before being deposited on the carrier film,
the fragmentation processing apparatus (A) comprises a first pin roller and a second pin roller, each of which has a rotation axis parallel to a rotation axis direction of the rotary cutter, and the first pin roller is rotationally driven such that its pins move downward from above on its side facing the second pin roller, and the second pin roller is rotationally driven such that its pins move downward from above on its side facing the first pin roller.

The manufacturing method according to [36],
wherein a sum of a maximum radius of the first pin roller and a maximum radius of the second pin roller is equal to or larger than a distance between rotation axes of the first pin roller and the second pin roller.

The manufacturing method according to [37],
wherein the sum of the maximum radius of the first pin roller and the maximum radius of the second pin roller is larger than the distance between the rotation axes of the first pin roller and the second pin roller.

The manufacturing method according to [36],
wherein a sum of a maximum radius of the first pin roller and a maximum radius of the second pin roller is smaller than a distance between rotation axes of the first pin roller and the second pin roller, and a difference therebetween is 10 mm or less.

The manufacturing method according to any one of [36] to [39],
wherein in each of the first pin roller and the second pin roller, a radius of a cylinder is equal to or larger than half of a maximum radius.

The manufacturing method according to any one of [36] to [40],
wherein a circumferential speed at a pin tip of the first pin roller is equal to a circumferential speed at a pin tip of the second pin roller.

The manufacturing method according to any one of [36] to [41],
wherein a content of a carbon fiber bundle having a filament number of more than 0.5K in the carbon fiber mat is 99% by weight or more.

The manufacturing method according to any one of [36] to [42],
wherein the carbon fiber mat is pressurized together with the thermosetting resin composition to impregnate the carbon fiber mat with the thermosetting resin composition.

The manufacturing method according to any one of [36] to [43],
wherein at least a part of the thermosetting resin composition is applied to an upper surface of the carrier film before forming the carbon fiber mat by depositing the chopped carbon fiber bundles.

### 2. Experimental Results

Hereinafter, results of experiments performed by the present inventors will be described.

### 2.1. Experiment 1

### (Preparation of a partially split continuous carbon fiber bundle)

As a starting material, a flat continuous carbon fiber bundle (TR50S15L manufactured by Mitsubishi Chemical Corporation) having a filament number of 15K, an initial width of 8 mm and a thickness of 0.1 mm was prepared. By forming four slit rows each having a slit length of 1,000 mm and an inter-slit gap length of 5 mm using a splitter having four rotary blades, the continuous carbon fiber bundle was partially split into five sub-bundles each having a width of 1.6 mm. Positions of inter-slit gaps along the fiber direction were the same among all of the slit rows.

After the partial splitting, by winding the continuous carbon fiber bundle on a paper bobbin having a diameter of 82 mm and a length of 280 mm with a traverse length of 254 mm, a square end type package was produced. By adjusting the width of a guide for guiding the fiber bundle, the total width of the continuous carbon fiber bundle during winding was made to be 6 mm or less.

### (Preparation of Carbon Fiber Mat)

A carbon fiber mat was prepared from the continuous carbon fiber bundle having a filament number of 15K and partially split into five sub-bundles prepared in the above-described procedure using an SMC manufacturing apparatus having the same configuration as the SMC manufacturing apparatus represented in Fig. 4 except that the fragmentation processing apparatus was not provided.

A plurality of the continuous carbon fiber bundles were supplied to a rotary cutter in a state of being aligned in parallel at an equal interval and were cut every 25.4 mm.

The chopped carbon fiber bundles were fallen onto a carrier film which travels below the rotary cutter at a line speed of 5 m/min and was not coated with a thermosetting resin composition. The fallen chopped carbon fiber bundles were deposited on the carrier film to form a carbon fiber mat.

### (Measurement of Distribution of Filament Numbers)

A region of approximately 21 cm × 30 cm deposited near a center line of the carrier film was selected from the carbon fiber mat prepared through the above-described procedure, and weights of all of the chopped carbon fiber bundles (300 pieces or more) included in the region was measured. Fig. 10 represents a distribution of the filament numbers of the chopped carbon fiber bundles in the carbon fiber mat, which was obtained by converting the measured weights into filament numbers.

In the prepared carbon fiber mat, a content of the carbon fiber bundle having the filament number of more than 0.5K was 99.9% by weight or more.

### 2.2. Experiment 2

The carbon fiber mat was prepared using the same SMC manufacturing apparatus used in Experiment 1 except that the fragmentation processing apparatus was provided, and the distribution of the filament numbers thereof was measured in the same manner as in Experiment 1. The procedure for preparing the carbon fiber mat was the same as that in Experiment 1 except that the chopped carbon fiber bundles were subjected to a fragmentation processing by the fragmentation processing apparatus before being deposited on the carrier film.

A configuration of the fragmentation processing apparatus was the same as that included in the SMC manufacturing apparatus represented in Fig. 4. Both the two pin rollers were formed of metal and had the same configuration. A diameter and a length of a pin disposed on a cylinder circumferential surface were respectively 3 mm and 20 mm. The disposition of the pins on the circumferential surface of the cylinder of each pin roller was periodic, and the disposition overlapped the original disposition when shifted by 7.5 mm in the axial direction and 6.5 mm in the circumferential direction. The sum of the maximum radii of the two pin rollers was 10 mm larger than the distance between the rotation axes of the two pin rollers.

The two pin rollers were rotated such that in both pin rollers the circumferential speeds at the pin tips were 377 m/min and in each pin rollers the pins moved downward from above on the side facing the other pin roller.

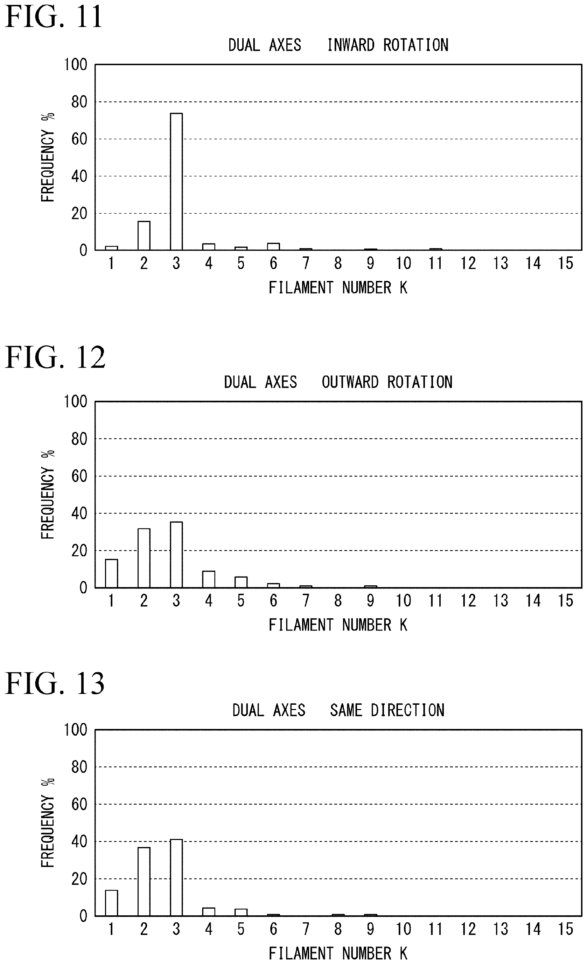

Fig. 11 represents the distribution of the filament numbers of the chopped carbon fiber bundles in the prepared carbon fiber mat.

In the prepared carbon fiber mat, a content of the carbon fiber bundle having the filament number of more than 0.5K was 99.9% by weight or more.

### 2.3. Experiment 3

The carbon fiber mat was prepared in the same manner as in Experiment 2 except that both the two pin rollers were rotated such that in each pin rollers the pins moved upward from below on the side facing the other pin roller, and the distribution of the filament numbers was measured.

Fig. 12 represents the distribution of the filament numbers of the chopped carbon fiber bundles in the prepared carbon fiber mat.

It was found that the chopped carbon fiber bundles tend to be more finely fragmented by the fragmentation processing of Experiment 3 compared to that of Experiment 2.

### 2.4. Experiment 4

The carbon fiber mat was prepared in the same manner as in Experiment 2 except that the two pin rollers were rotated in the same direction, and the distribution of the filament numbers was measured.

Fig. 13 represents the distribution of the filament numbers of the chopped carbon fiber bundles in the prepared carbon fiber mat.

It was found that the chopped carbon fiber bundles tend to be more finely fragmented by the fragmentation processing of Experiment 4 compared to that of Experiment 2.

### 2.5. Experiment 5

The carbon fiber mat was prepared in the same manner as in Experiment 2 except that the distance between the rotation axes of the two pin rollers was the same as the sum of the maximum radii of the two pin rollers, and the distribution of the filament numbers was measured.

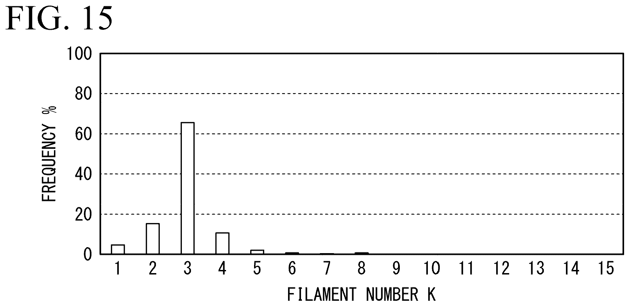

Fig. 15 represents the distribution of the filament numbers of the chopped carbon fiber bundles in the prepared carbon fiber mat.

### 2.6. Experiment 6

A square end type fiber package was produced by preparing and partially splitting a flat continuous carbon fiber bundle having the filament number of 15,000 (15K), the initial width of 8 mm and the thickness of 0.1 mm and thereafter, winding the partially split continuous carbon fiber bundle on a paper bobbin having a diameter of 82 mm and a length of 280 mm with a traverse length of 254 mm. Widening with a spreader was not performed.

A splitter having four rotary blades was used for partially splitting the continuous carbon fiber bundle. By forming four slit rows each having the slit length of 1,000 mm and the inter-slit gap length of 5 mm, the continuous carbon fiber bundle was split into five sub-bundles each having the width of 1.6 mm and partially joined to each other. Positions of inter-slit gap in the fiber direction were the same among all of the slit rows.

In winding, the lead angle at the winding start was 9.9°, the lead angle at the winding end was 5°, the winding ratio was 11.30, and the winding amount was 5.0 kg.

By adjusting a groove width of a grooved roll which the continuous carbon fiber bundle passed through after the split processing, the total width of the continuous carbon fiber bundle wound on the bobbin was made to be 6 mm which was 75% of the total sum of the widths of the sub-bundles. When the bobbin was pulled out from the produced fiber package and the continuous carbon fiber bundle was drawn out by internal unwinding, no particular problem was found out.

In contrast, with a fiber package produced in the same manner, except that the total width of the continuous carbon fiber bundle wound on the bobbin was made to be 8 mm which was the same as the total sum of the widths of the sub-bundles, when the bobbin was pulled out and the continuous carbon fiber bundle was drawn out by internal unwinding, frequency of occurrence of entanglement was relatively high.

The present invention has been described above with reference to specific embodiments. However, each embodiment is presented as an example, and does not limit the scope of the present invention. Each embodiment described in the present specification can be modified in various ways within the scope defined by the appended claims, and can be combined with characteristics described in other embodiments to the extent practicable.

### [Reference Signs List]

10: Continuous carbon fiber bundle
11: Sub-bundle
20: Chopped carbon fiber bundle
100: Fiber package manufacturing apparatus
110: Spread section
120: Split section
130: Winding section
200: SMC manufacturing apparatus
210: First resin application section
220: Second resin application section
230: Chopping section
240: Deposition section
250: Impregnation section
260: Fragmentation processing apparatus

## Claims

1. An SMC manufacturing method comprising:
(i) drawing out a continuous carbon fiber bundle from a package, the continuous carbon fiber bundle having a filament number of NK and partially split into n sub-bundles in advance;
(ii) forming chopped carbon fiber bundles by chopping the continuous carbon fiber bundle drawn out from the package with a rotary cutter;
(iii) forming a carbon fiber mat by depositing the chopped carbon fiber bundles on a carrier film traveling below the rotary cutter; and
(iv) impregnating the carbon fiber mat with a thermosetting resin composition,
wherein fragmentation processing using a fragmentation processing apparatus (A) below is performed on the chopped carbon fiber bundles before being deposited on the carrier film,
the fragmentation processing apparatus (A) comprising a first pin roller and a second pin roller, each of which has a rotation axis parallel to a rotation axis direction of the rotary cutter, a sum of a maximum radius of the first pin roller and a maximum radius of the second pin roller is larger than the distance between the rotation axes of the first pin roller and the second pin roller, and the first pin roller is rotationally driven such that its pins move downward from above on its side facing the second pin roller, and the second pin roller is rotationally driven such that its pins move downward from above on its side facing the first pin roller.

2. The manufacturing method according to Claim 1,
wherein in the package, the continuous carbon fiber bundle is wound such that there is no gap between the sub-bundles.

3. The manufacturing method according to Claim 1 or 2,
wherein in the package, the continuous carbon fiber bundle is wound such that adjacent sub-bundles overlap each other.

4. The manufacturing method according to any one of Claims 1 to 3, wherein a total width of the continuous carbon fiber bundle wound in the package is smaller than a total sum of widths of the sub-bundles.

5. The manufacturing method according to any one of Claims 1 to 4, wherein N is 15 or more.

6. The manufacturing method according to any one of Claims 1 to 5, wherein in each of the first pin roller and the second pin roller, a radius of a cylinder is equal to or larger than half of a maximum radius.

7. The manufacturing method according to any one of Claims 1 to 6, wherein a circumferential speed at a pin tip of the first pin roller is equal to a circumferential speed at a pin tip of the second pin roller.

8. The manufacturing method according to any one of Claims 1 to 7, wherein a content of a carbon fiber bundle having a filament number of more than 0.5K in the carbon fiber mat is 99% by weight or more.

9. The manufacturing method according to any one of Claims 1 to 8, wherein the fragmentation processing reduces a number of the chopped carbon fiber bundles having a filament number of larger than {(N/n) + 0.5}K comprised in a unit weight of the carbon fiber mat.

## Patentansprüche

1. SMC-Herstellungsverfahren, umfassend:
(i) Herausziehen eines kontinuierlichen Kohlenstofffaserbündels aus einer Packung, wobei das kontinuierliche Kohlenstofffaserbündel eine Filamentzahl von NK aufweist und vorab teilweise in n Unterbündel aufgeteilt ist;
(ii) Bilden von geschnittenen Kohlenstofffaserbündeln, indem die aus der Packung herausgezogenen kontinuierlichen Kohlenstofffaserbündel mit einem Rotationsschneider geschnitten werden;
(iii) Bilden einer Kohlenstofffasermatte, indem die geschnittenen Kohlenstofffaserbündel auf einem Trägerfilm, der unterhalb des Rotationsschneiders läuft, deponiert werden; und
(iv) Imprägnieren der Kohlenstofffasermatte mit einer wärmehärtenden Harzzusammensetzung,
wobei an den geschnittenen Kohlenstofffaserbündeln eine Fragmentierungsverarbeitung unter Verwendung der nachstehenden Fragmentierungsverarbeitungsvorrichtung (A) durchgeführt wird, bevor sie auf dem Trägerfilm deponiert werden,
wobei die Fragmentierungsverarbeitungsvorrichtung (A) eine erste Stiftwalze und eine zweite Stiftwalze umfasst, von denen jede eine Rotationsachse parallel zu einer Rotationsachsenrichtung des Rotationsschneiders aufweist, wobei die Summe eines maximalen Radius der ersten Stiftwalze und eines maximalen Radius der zweiten Stiftwalze größer ist als der Abstand zwischen den Rotationsachsen der ersten Stiftwalze und der zweiten Stiftwalze, und wobei die erste Stiftwalze so rotierend angetrieben wird, dass sich ihre Stifte auf ihrer der zweiten Stiftwalze zugewandten Seite von oben nach unten bewegen, und die zweite Stiftwalze so rotierend angetrieben wird, dass sich ihre Stifte auf ihrer der ersten Stiftwalze zugewandten Seite von oben nach unten bewegen.

2. Herstellungsverfahren gemäß Anspruch 1,
wobei in der Verpackung das kontinuierliche Kohlenstofffaserbündel so gewickelt ist, dass zwischen den Unterbündeln keine Lücke besteht.

3. Herstellungsverfahren gemäß Anspruch 1 oder 2,
wobei das kontinuierliche Kohlenstofffaserbündel in der Packung so gewickelt ist, dass benachbarte Unterbündel einander überlappen.

4. Herstellungsverfahren gemäß mindestens einem der Ansprüche 1 bis 3,
wobei eine Gesamtbreite des in der Packung gewickelten kontinuierlichen Kohlenstofffaserbündels kleiner ist als die Gesamtsumme der Breiten der Unterbündel.

5. Herstellungsverfahren gemäß mindestens einem der Ansprüche 1 bis 4,
wobei N 15 oder mehr ist.

6. Herstellungsverfahren gemäß mindestens einem der Ansprüche 1 bis 5,
wobei sowohl bei der ersten als auch bei der zweiten Stiftwalze der Radius eines Zylinders gleich oder größer als die Hälfte eines maximalen Radius ist.

7. Herstellungsverfahren gemäß mindestens einem der Ansprüche 1 bis 6,
wobei eine Umfangsgeschwindigkeit an einer Stiftspitze der ersten Stiftwalze gleich einer Umfangsgeschwindigkeit an einer Stiftspitze der zweiten Stiftwalze ist.

8. Herstellungsverfahren gemäß mindestens einem der Ansprüche 1 bis 7,
wobei der Gehalt eines Kohlenstofffaserbündels mit einer Filamentzahl von mehr als 0,5K in der Kohlenstofffasermatte 99 Gew.-% oder mehr beträgt.

9. Herstellungsverfahren gemäß mindestens einem der Ansprüche 1 bis 8,
wobei die Fragmentierungsverarbeitung die Anzahl der geschnittenen Kohlenstofffaserbündel mit einer Filamentzahl von mehr als {(N/n) + 0,5}K, die in einer Gewichtseinheit der Kohlenstofffasermatte umfasst sind, reduziert.

## Revendications

1. Procédé de fabrication de mélange à mouler en feuille (SMC) comprenant :
(i) le tirage d'un faisceau de fibres de carbone continu d'un emballage, le faisceau de fibres de carbone continu présentant un nombre de filaments de NK et étant partiellement fendu en n sous-faisceaux à l'avance ;
(ii) la formation de faisceaux de fibres de carbone hachés en hachant le faisceau de fibres de carbone continu tiré de l'emballage avec un dispositif de coupe rotatif ;
(iii) la formation d'un tapis de fibres de carbone en déposant les faisceaux de fibres de carbone hachés sur un film support avançant sous le dispositif de coupe rotatif ; et
(iv) l'imprégnation du tapis de fibres de carbone avec une composition de résine thermodurcissable, dans lequel un traitement de fragmentation en utilisant un appareil (A) de traitement de fragmentation dessous est réalisé sur les faisceaux de fibres de carbone hachés avant d'être déposés sur le film support,
l'appareil (A) de traitement de fragmentation comprenant un premier rouleau à broche et un deuxième rouleau à broche, chacun desquels présente un axe de rotation parallèle à une direction d'axe de rotation du dispositif de coupe rotatif, une somme d'un rayon maximum du premier rouleau à broche et d'un rayon maximum du deuxième rouleau à broche est supérieure à la distance entre les axes de rotation du premier rouleau à broche et du deuxième rouleau à broche, et le premier rouleau à broche est entraîné en rotation de sorte que ses broches se déplacent vers le bas à partir du dessus sur son côté face au deuxième rouleau à broche, et le deuxième rouleau à broche est entraîné en rotation de sorte que ses broches se déplacent vers le bas à partir du dessus sur son côté face au premier rouleau à broche.

2. Procédé de fabrication selon la revendication 1,
dans lequel dans l'emballage, le faisceau de fibres de carbone continu est enroulé de sorte qu'il n'y a pas d'espace entre les sous-faisceaux.

3. Procédé de fabrication selon la revendication 1 ou la revendication 2,
dans lequel dans l'emballage, le faisceau de fibres de carbone continu est enroulé de sorte que les sous-faisceaux adjacents se chevauchent les uns les autres.

4. Procédé de fabrication selon l'une quelconque des revendications 1 à 3,
dans lequel une largeur totale du faisceau de fibres de carbone continu enroulé dans l'emballage est inférieure à une somme totale de largeurs des sous-faisceaux.

5. Procédé de fabrication selon l'une quelconque des revendications 1 à 4, dans lequel N est 15 ou plus.

6. Procédé de fabrication selon l'une quelconque des revendications 1 à 5,
dans lequel dans chacun du premier rouleau à broche et du deuxième rouleau à broche, un rayon d'un cylindre est supérieur ou égal à la moitié d'un rayon maximum.

7. Procédé de fabrication selon l'une quelconque des revendications 1 à 6,
dans lequel une vitesse circonférentielle au niveau d'une pointe de broche du premier rouleau à broche est égale à une vitesse circonférentielle au niveau d'une pointe de broche du deuxième rouleau à broche.

8. Procédé de fabrication selon l'une quelconque des revendications 1 à 7,
dans lequel un contenu d'un faisceau de fibres de carbone présentant un nombre de filaments de plus de 0,5 K dans le tapis de fibres de carbone est 99 % en poids ou plus.

9. Procédé de fabrication selon l'une quelconque des revendications 1 à 8,
dans lequel le traitement de fragmentation réduit un nombre des faisceaux de fibres de carbone hachés présentant un nombre de filaments de plus de {(N/n) + 0.5}K compris en un poids unitaire du tapis de fibres de carbone.
